# EUROPÄISCHE PATENTSCHRIFT

(11) **EP 1 223 486 B1**
(45) Veröffentlichungstag und Bekanntmachung des Hinweises auf die Patenterteilung: **17.08.2005**
(21) Anmeldenummer: 01129462.6
(22) Anmeldetag: 11.12.2001
(51) Int. Cl.: G05B 19/23, F15B 9/09, G05B 19/19

(54) **Verfahren zur Regelung der Bewegung einer von einem druckmittelbeaufschlagten hydraulischen Zylinder bewegbaren Masse**
Method of controlling the movement of a mass moved by a pressurised hydraulic cylinder
Procédé pour le réglage du mouvement d'une masse qui est entrainée par un vérin hydraulique pressurisé

(30) Priorität: 11.01.2001 DE 10100965
(43) Veröffentlichungstag der Anmeldung: 17.07.2002
(73) Patentinhaber: Bosch Rexroth AG, 97816 Lohr am Main (DE)
(72) Erfinder: Antoszkiewicz, Peter, 97828 Marktheidenfeld (DE)

(56) Entgegenhaltungen:
- EP-A- 0 605 021
- US-A- 4 581 699
- PATENT ABSTRACTS OF JAPAN vol. 2000, no. 01, 31. Januar 2000 (2000-01-31) & JP 11 291312 A (TOYO MACH &METAL CO LTD), 26. Oktober 1999 (1999-10-26)

## Beschreibung

Die Erfindung betrifft ein Verfahren zur Regelung der Bewegung einer von einem druckmittelbeaufschlagten hydraulischen Zylinder bewegbaren Masse, die über ein Getriebe mit hubabhängiger Übersetzung, insbesondere über eine Kniehebelanordnung, mit der Kolbenstange des Zylinders verbunden ist, gemäß dem Oberbegriff des Anspruchs 1. Ein derartiges Regelungs verfahren ist aus EP 0605021 A bekannt.

Systeme mit einer Masse, die von einem druckmittelbeaufschlagten hydraulischen Zylinder bewegt wird, wobei zwischen der Kolbenstange des Zylinders und der Masse ein Getriebe mit hubabhängiger Übersetzung in Form einer Kniehebelanordnung vorgesehen ist, werden u. a. in Spritzgießmaschinen eingesetzt, insbesondere zum Bewegen von Werkzeugen beim Schließen und Öffnen der Spritzgießformen.

Befindet sich zwischen der Kolbenstange eines hydraulischen Zylinders und einer zu bewegenden Masse ein Getriebe, so ist die Größe der auf die Kolbenstange wirkenden resultierenden Masse das Produkt aus der zu bewegenden Masse und dem Quadrat des Übersetzungsverhältnisses des Getriebes. Die Eigenfrequenz des aus dem Zylinder, dem Getriebe und der zu bewegenden Masse gebildeten Systems ist durch das in den Kammern des Zylinders eingeschlossene Ölvolumen und die resultierende Masse bestimmt. Bei Getrieben, deren Übersetzung unabhängig von der Position der zu bewegenden Masse ist, wie z. B. bei Zahnradgetrieben oder einfachen Hebelgetrieben, ändert sich die Eigenfrequenz nur in Abhängigkeit von dem sich über den Zylinderhub ändernden Ölvolumen. Bei einem Getriebe mit hubabhängiger Übersetzung dagegen, wie z. B. bei einem Kniehebelantrieb, ändert sich das Übersetzungsverhältnis zusätzlich in Abhängigkeit von der Position der zu bewegenden Masse. Die Eigenfrequenz ist in diesem Fall nicht mehr nur von der hubabhängigen Änderung des im Zylinder eingeschlossenen Ölvolumens sondern auch von dem sich mit der Position der zu bewegenden Masse ändernden Übersetzungsverhältnis des Getriebes abhängig. Befindet sich die zu bewegende Masse in einem Mittelbereich zwischen ihren Endlagen, ist die Eigenfrequenz des aus dem Zylinder, dem Getriebe und der zu bewegenden Masse gebildeten Systems niedrig. Befindet sich die zu bewegende Masse dagegen in der Nähe der Endlagen, steigt die Eigenfrequenz sehr stark an. Dabei steigt die Eigenfrequenz um so stärker an, je mehr sich die Masse der jeweiligen Endlage nähert. Für die Regelung der Bewegung von derartigen Systemen wirkt sich die in den Endlagen der zu bewegenden Masse sehr hohe Eigenfrequenz nachteilig aus. Da die Parameter der Regeleinrichtung so eingestellt werden müssen, daß sich auch bei der höchsten Eigenfrequenz keine Instabilität einstellt, führt dies in Bereichen mit niedriger Eigenfrequenz zu einem spürbaren Dynamikverlust.

Der Erfindung liegt die Aufgabe zugrunde, ein Verfahren der eingangs genannten Art anzugeben, das es erlaubt, die Parameter der Regeleinrichtung entsprechend den Bereichen niedriger Eigenfrequenz einzustellen, ohne daß in Bereichen mit hoher Eigenfrequenz Instabilitäten auftreten.

Diese Aufgabe wird durch die im Anspruch 1 gekennzeichneten Merkmale gelöst. Da in Bereichen mit hoher Eigenfrequenz die Rückführung des Beschleunigungssignals praktisch nicht wirksam ist, ist es zulässig, in Bereichen mit niedriger Eigenfrequenz die Parameter der Regeleinrichtung dieser Frequenz entsprechend zu optimieren, wodurch es in den Bereichen mit niedriger Eigenfrequenz nicht zu Dynamikverlusten kommt.

Vorteilhafte Weiterbildungen der Erfindung sind in den Unteransprüchen gekennzeichnet. Da zwischen der Position der bewegbaren Masse und der Position der Kolbenstange ein fester Zusammenhang besteht, ist es ausreichend, für die Wichtung des Beschleunigungssignals anstelle der Position der bewegbaren Masse die Position der Kolbenstange zu erfassen. Der Rechenaufwand läßt sich verringern, wenn der Zusammenhang zwischen der Position der bewegbaren Masse und dem Faktor für die Wichtung des Beschleunigungssignals durch eine Trapezfunktion angenähert wird. In diesem Fall brauchen anstelle des den Zusammenhang zwischen der Position der Masse und der Eigenfrequenz des aus dem Zylinder, dem Getriebe und der zu bewegenden Masse gebildeten Systems beschreibenden exakten Profils nur vier Punkte abgespeichert zu werden. Die Beschleunigung der Kolbenstange läßt sich auf einfache Weise dadurch ermitteln, daß man ihre Position zwei Mal nach der Zeit ableitet. Digitale Wegsensoren sind hierbei gegenüber analogen Wegsensoren von Vorteil, da bei ihnen das Problem der zeitlichen Ableitung von dem Positionssignal überlagerten Rauschsignalen nur in geringem Maß auftritt.

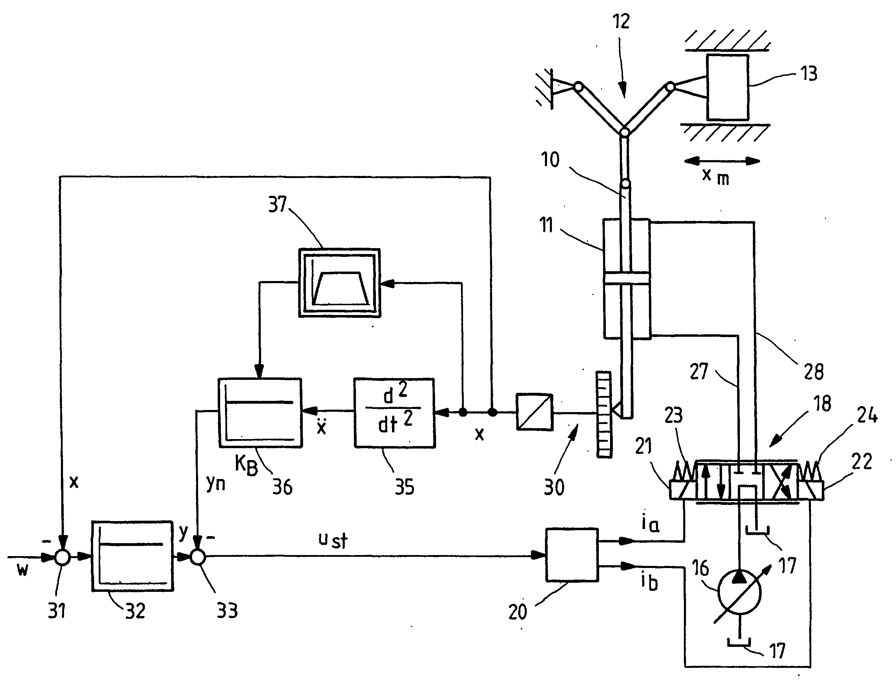

Die Erfindung wird im folgenden mit ihren weiteren Einzelheiten anhand eines in der einzigen Zeichnung dargestellten Ausführungsbeispiels näher erläutert. Die Zeichnung zeigt einen Kniehebelantrieb und seine Ansteuerung in schematischer Darstellung.

Die Kolbenstange 10 eines hydraulischen Zylinders 11 bewegt über eine Kniehebelanordnung 12 eine in einem Schubgelenk geführte Masse 13. Bei der Kniehebelanordnung 12 handelt es sich um ein Getriebe mit hubabhängiger Übersetzung, dessen Übersetzungsverhältnis von der Position der Masse 13 abhängig ist. Derartige Getriebe werden in Spritzgießmaschinen eingesetzt, weil ihr kinematischer Geschwindigkeitsverlauf günstig für das Schließen und Öffnen der Spritzgießwerkzeuge ist. Bei der Masse 13 handelt es sich um eine Werkzeughälfte eines Spritzgießwerkzeugs, die hier nur schematisch dargestellt ist. Die Position der Masse 13 ist mit xm bezeichnet. Eine in der Zeichnung als Verstellpumpe dargestellte Pumpe 16 fördert Druckmittel aus einem Tank 17. Ein elektro-magnetisch betätigtes hydraulisches Ventil 18 steuert die Druckmittelzufuhr zu den Kammern des Zylinders 11. Ein Verstärker 20 setzt eine Steuerspannung ust in Ströme ia und ib um. Die Ströme ia und ib sind Magneten 21 bzw. 22 zugeführt. Der Steuerschieber des Ventils 18 ist bei fehlender Ansteuerung durch Federn 23 und 24 in seiner Mittelstellung gehalten. Das Vorzeichen der Steuerspannung ust bestimmt, ob der Magnet 21 oder der Magnet 22 mit Strom beaufschlagt wird. Der Betrag der Steuerspannung ust bestimmt die Größe der Auslenkung des Steuerschiebers des Ventils 18. Die Auslenkung des Steuerschiebers bestimmt den Öffnungsquerschnitt des Ventils 18 und damit die Geschwindigkeit, mit der die Kolbenstange 10 ein- oder ausfährt. Ist die Steuerspannung ust positiv, wird der Magnet 21 mit einem Strom ia beaufschlagt, dessen Höhe durch den Betrag der Steuerspannung ust bestimmt ist. Dieser Strom lenkt den Steuerschieber des Ventils 18 so aus, daß Druckmittel von der Pumpe 16 über eine Leitung 27 in die untere Kammer des Zylinders 11 fließt. Die Kolbenstange 10 fährt aus und bewegt die Masse 13 über die Kniehebelanordnung 12 nach rechts. Aus der oberen Kammer des Zylinders 10 wird Druckmittel verdrängt und fließt über eine Leitung 28 und das Ventil 18 zum Tank 17 zurück. Ist die Steuerspannung ust negativ, wird der Magnet 22 mit einem Strom ib beaufschlagt, dessen Höhe durch den Betrag der Steuerspannung ust bestimmt ist. Dieser Strom lenkt den Steuerschieber des Ventils 18 so aus, daß Druckmittel von der Pumpe 16 über die Leitung 28 in die obere Kammer des Zylinders 11 fließt. Die Kolbenstange 10 fährt ein und bewegt die Masse 13 über die Kniehebelanordnung 12 nach links. Aus der unteren Kammer des Zylinders 10 wird Druckmittel verdrängt und fließt über die Leitung 27 und das Ventil 18 zum Tank 17 zurück.

Ein nur schematisch dargestellter Wegsensor 30 erfaßt die Position der Kolbenstange 10. Die Position der Kolbenstange 10 ist im folgenden mit x bezeichnet. Da über die Kniehebelanordnung 12 ein fester Zusammenhang zwischen der Position xm der Masse 13 und der Position x der Kolbenstange 10 besteht, ist es nicht erforderlich, einen zusätzlichen Wegsensor für die Position xm der Masse 13 vorzusehen, sondern es genügt, die Position x der Kolbenstange 10 zu erfassen und aus dieser die Position der Masse xm zu berechnen. Zur Erfassung der Position der Kolbenstange 10 wird vorzugsweise ein digitaler Wegsensor verwendet, um bei der zeitlichen Ableitung des Positionssignals den Einfluß von Rauschsignalen, die dem Nutzsignal überlagert sind, zu vermindern. Eine Vergleichseinrichtung 31 bildet die Differenz aus einer Führungsgröße w für die Position der Kolbenstange 10 und der als Istwert dienenden Position x der Kolbenstange. Das Ausgangssignal der Vergleichseinrichtung 31 ist einem Regler 32 mit P-Verhalten als Regelabweichung zugeführt. Eine Verknüpfungsschaltung 33 überlagert dem Ausgangssignal y des Reglers 32 eine Hilfsgröße yh. Die Verknüpfungsschaltung 33 gibt die Steuerspannung ust ab, die die Richtung und den Betrag der Geschwindigkeit, mit der sich die Kolbenstange 10 des Zylinders 11 bewegt, bestimmt. Ein Differenzierglied 35 bildet durch zweimalige zeitliche Ableitung der Position x der Kolbenstange 10 ein Signal 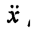 , das ein Maß für die Beschleunigung der Kolbenstange 10 ist. Dem Differenzierglied 35 ist ein P-Glied 36 mit steuerbarem Verstärkungsfaktor nachgeschaltet. Der Verstärkungsfaktor des P-Glieds 36 ist mit KB bezeichnet. Die Einstellung des Verstärkungsfaktors KB erfolgt durch das Ausgangssignal eines Funktionsbildners 37, der die Position x der Kolbenstange 10 in eine Trapezfunktion umformt. Die Trapezfunktion bildet näherungsweise den Zusammenhang zwischen der Eigenfrequenz des aus dem Zylinder 11, dem Getriebe 12 und der zu bewegenden Masse 23 bestehenden Systems und der Position der zu bewegenden Masse 13 bzw. der Kolbenstange 10 nach. Anders als bei der Speicherung des exakten Profils brauchen für die Trapezfunktion nur vier Punkte abgespeichert zu werden. Diese Maßnahme führt zu einer wesentlichen Verringerung des erforderlichen Speicherplatzes. Der Funktionsbildner 37 sorgt dafür, daß der Verstärkungsfaktor KB in den Bereichen nahe den Endlagen der zu bewegenden Masse 13 klein und in dem zwischen den Endlagen liegenden Mittelbereich groß ist. Das bedeutet, daß die Hilfsgröße yh, die von der Ausgangsgröße y des Reglers 32 subtrahiert wird, nur in dem Mittelbereich zwischen den Endlagen wirksam ist und sich daran anschließend bis zu den Endlagen verringert, bis sie in den Endlagen praktisch nicht mehr wirksam ist.

Für die auf die Kolbenstange wirkende resultierenden Masse ist nicht die Übersetzung der Position der Angriffspunkte von Masse und Kolbenstange maßgebend sondern die Übersetzung der Geschwindigkeit zwischen den Angriffspunkten von Masse und Kolbenstange. Für den Einsatz des erfindungsgemäßen Verfahrens wird daher zunächst die Geschwindigkeitsübersetzung der Kniehebelanordnung 12 in Abhängigkeit von der Position der Kolbenstange 10 ermittelt. Aus diesem Zusammenhang wird anschließend die Eigenfrequenzkurve über den Hub der Kolbenstange 10 unter Berücksichtigung der Übersetzung berechnet. In Abhängigkeit von dem Übertragungsverhalten des Ventils 18 wird danach der Wirkungsbereich der Hilfsgrößenaufschaltung als Trapezprofil festgelegt. Zum Abschluß wird der Regler 32 in üblicher Weise optimiert.

Das erfindungsgemäße Verfahren ist nicht nur in Verbindung mit einer Positionsregelung für die Kolbenstange 10 - wie in der Figur dargestellt - einsetzbar, sondern auch für eine Steuerung der Geschwindigkeit, mit der die Kolbenstange 10 bewegt wird. Dies ist dann der Fall, wenn die Signalverbindung zwischen dem Regler 32 und der Verknüpfungsschaltung 33 aufgetrennt ist und der Verknüpfungsschaltung 33 anstelle des Ausgangsspannung des Reglers 32 eine externe Steuerspannung als Maß für die Geschwindigkeit, mit der die Kolbenstange 10 des Zylinders 11 bewegt werden soll, zugeführt ist.

Das erfindungsgemäße Verfahren läßt sich auch bei Antrieben einsetzen, bei denen die Steuerung der dem Zylinder zugeführten Druckmittelmenge über einen reinen Pumpenantrieb mit verstellbarem Volumenstrom erfolgt, so daß das Drosselverluste erzeugende Ventil zwischen der Pumpe und dem Zylinder entfallen kann. Dabei kann die Steuerung des Volumenstroms durch das Fördervolumen der Pumpe und/oder durch die Steuerung der Drehzahl des die Pumpe antreibenden Motors erfolgen.

Das erfindungsgemäße Verfahren läßt sich nicht nur vorteilhaft für die Regelung der Bewegung von Kniehebelanordnungen in Kunststoffmaschinen - wie in dem obigen Ausführungsbeispiel beschrieben - sondern auch zur Regelung der Bewegung von Kniehebelanordnungen in Pressen einsetzen. Allgemein ist das erfindungsgemäße Verfahren immer dann anwendbar, wenn eine Masse über ein Getriebe mit hubabhängiger Übersetzung von einem hydraulischen Zylinder angetrieben wird.

## Patentansprüche

1. Verfahren zur Regelung der Bewegung einer von einem druckmittelbeaufschlagten hydraulischen Zylinder bewegbaren Masse, die über ein Getriebe mit hubabhängiger Übersetzung, insbesondere über eine Kniehebelanordnung, mit der Kolbenstange des Zylinders verbunden ist,
- bei dem die Druckmittelzufuhr zu dem Zylinder von einem Regler für die Position der Kolbenstange gesteuert wird und
- bei dem der Ausgangsgröße des Reglers eine von der Beschleunigung der Kolbenstange abhängige Hilfsgröße überlagert wird, die ein Maß für die Beschleunigung der Kolbenstange ist,
**dadurch gekennzeichnet,**
**daß** als Hilfsgröße (yh) ein Beschleunigungssignal ( 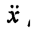 ) dient, das in Abhängigkeit von der Position (xm) der Masse (13) derart gewichtet wird, daß die Wirkung der Hilfsgröße (yh) auf den Regelvorgang in Bereichen hoher Eigenfrequenz des aus dem Zylinder (11), dem Getriebe (12) und der bewegbaren Masse (13) gebildeten Systems verringert wird.

2. Verfahren nach Anspruch 1, **dadurch gekennzeichnet, daß** das Beschleunigungssignal ( 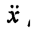 ) mit einem von der Position (x) der Kolbenstange (10) abhängigen Faktor (KB) multipliziert wird.

3. Verfahren nach Anspruch 2 **dadurch gekennzeichnet, daß** der Zusammenhang zwischen der Position (x) der Kolbenstange (10) und dem Faktor (KB) für die Wichtung des Beschleunigungssignals ( 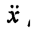 ) bei einer Kniehebelanordnung (12) durch eine Trapezfunktion angenähert ist.

4. Verfahren nach einem der vorhergehenden Ansprüche, **dadurch gekennzeichnet, daß** ein digitaler Wegsensor (30) zur Erfassung der Position (x) der Kolbenstange (10) verwendet wird.

## Claims

1. A method for controlling the movement of a mass that can be moved by a hydraulic cylinder acted upon by pressure medium, the mass being connected via a gear with siroke-dependent transmission ratio, in particular via a toggle-lever arrangement, to the piston rod of the cylinder,
- in which the pressure medium supply to the cylinder is controlled by a controller for the position of the piston rod, and
- in which the starting variable of the controller is superimposed by an auxiliary variable dependent upon the acceleration of the piston rod and constituting a measure of the acceleration of the piston rod,
**characterized by the fact that**
an acceleration signal (*x*") serves as auxiliary variable (yh) and is weighted as a function of the position (xm) of the mass (13) in such a manner that the effect of the auxiliary variable (yh) on the control process is reduced in ranges of high intrinsic frequencies of the system formed by the cylinder (11), the gear (12) and the movable mass (13).

2. A method according to claim 1, **characterized by the fact that** the acceleration signal (*x*") is multiplied by a factor (KB) which is dependent upon the position (x) of the piston rod (10).

3. A method according to claim 2, **characterized by** the fact that the relationship between the position (x) of the piston rod (10) and the factor (KB) for the weighting of the acceleration signal (x") is approximated for a toggle lever arrangement (12) by a trapezoidal function.

4. A method according to any of the preceding claims, **characterized by** the fact that a digital position sensor (30) for sensing the position (x) of the piston rod (10) is used.

## Revendications

1. Un procédé d'asservissement du mouvement d'une masse, qu'un vérin hydraulique sollicité par un fluide sous pression peut déplacer et qu'une transmission dont la traduction est fonction de la position, en particulier un mécanisme à levier coudé, relie à la tige de vérin du vérin,
- pour lequel l'alimentation du vérin en fluide de pression est commandée par un régulateur de position de la tige de vérin et
- pour lequel une grandeur auxiliaire, qui est fonction de l'accélération de la tige de vérin et qui constitue une mesure de l'accélération de la tige de vérin, est superposée à la grandeur de sortie du régulateur,
**caractérisé en ce que**
la grandeur (yh) auxiliaire est donnée par un signal (x") d'accélération, qui est pondéré en fonction de la position (xm) de la masse (13), de façon à réduire l'effet de la grandeur (yh) auxiliaire sur le processus d'asservissement dans les zones où le système constitué du vérin (11), de la transmission (12) et de la masse (13) mobile présente une fréquence propre élevée.

2. Un procédé selon la revendication n° 1, **caractérisé en ce que** le signal (x") d'accélération est multiplié par un coefficient (KB), qui dépend de la position (x) de la tige (10) de vérin.

3. Un procédé selon la revendication n° 2, **caractérisé en ce que** la relation entre la position (x) de la tige (10) de vérin et le coefficient (KB), servant à la pondération du signal (x") d'accélération, est obtenue par approximation à l'aide d'une fonction trapézoïdale pour un mécanisme (12) à levier coudé.

4. Un procédé selon une des revendications précédentes, **caractérisé en ce qu'**un capteur (30) de position digital est utilisé pour saisir la position (x) de la tige (10) de vérin.
